# EUROPÄISCHE PATENTSCHRIFT

(11) **EP 2 841 292 B1**
(45) Veröffentlichungstag und Bekanntmachung des Hinweises auf die Patenterteilung: **15.06.2016**
(21) Anmeldenummer: 13707111.4
(22) Anmeldetag: 23.02.2013
(51) Int. Cl.: B60L 3/04, B60L 3/12, B60L 3/00

(54) **FAHRZEUG UND VERFAHREN ZUM SICHEREN ABSCHALTEN VON HOCHSPANNUNGSERZEUGENDEN EINRICHTUNGEN BEI EINEM UNFALL**
VEHICLE AND METHOD FOR SECURE SWITCHING-OFF OF HIGH-VOLTAGE GENERATING DEVICES IN CASE OF ACCIDENT
VÉHICULE ET PROCÉDÉ DE MISE HORS TENSION DES DISPOSITIFS DE PRODUCTION HAUTE-TENSION AU CAS D'UN ACCIDENT

(30) Priorität: 28.04.2012 DE 102012008680
(43) Veröffentlichungstag der Anmeldung: 04.03.2015
(73) Patentinhaber: Audi AG, 85045 Ingolstadt (DE)
(72) Erfinder: STADLER, Michael, 85110 Arnsberg (DE); HLADIK, Jürgen, 85084 Reichertshofen (DE); THÖMMES, Marco, 85049 Ingolstadt (DE)
(74) Vertreter: Brandt, Kai
(86) Internationale Anmeldenummer: PCT/EP2013/000530
(87) Internationale Veröffentlichungsnummer: WO 2013/159848

(56) Entgegenhaltungen:
- EP-A1- 1 270 309
- DE-A1- 4 323 604
- DE-A1-102010 029 806
- US-A1- 2010 044 126

## Beschreibung

Die vorliegende Erfindung betrifft ein Fahrzeug und ein Verfahren zum sicheren Abschalten von hochspannungserzeugenden Einrichtungen bei einem Unfall.

In Hybrid- und Elektrofahrzeugen ist beispielsweise zur Versorgung der zum Antrieb des Fahrzeugs verwendeten Elektromotoren und zur Versorgung der Leistungselektronik ein sogenanntes Hochvolt-System (HV-System) vorhanden. Nach dem derzeitigen Stand der Technik liegen in den hierfür verwendeten Leitern sowie in Elektrokabeln, die zu einer Verteilungseinrichtung oder Ladedose führen, etc., oftmals Spannungen im Bereich von etwa 300 bis 600 V an.

Bauteile bzw. Einrichtungen mit derart hohen Spannungen werden in Fahrzeugen eingesetzt, um die für eine bestimmte, erforderliche Leistung benötigte Stromstärke gering halten zu können. Hierdurch können vergleichsweise kleine Leiterquerschnitte realisiert werden, was sich günstig in Bezug auf das erforderliche Gewicht der Bauteile bzw. Einrichtungen und somit auch auf das Gesamtgewicht des Fahrzeugs auswirkt.

Insbesondere bei einem außergewöhnlichen Betriebszustand eines Fahrzeugs, wie er beispielsweise bei/nach einem Unfall gegeben ist, ist es erforderlich, dass die HV-Systeme zuverlässig von der Spannungsquelle getrennt werden.

Hierzu ist es bekannt, für den Nachweis eines Aufpralls eines Fahrzeugs bzw. eines Aufprall auf ein Fahrzeug beispielsweise ein Airbag-Steuergerät zu verwenden. Wird ein Aufprall festgestellt, kann dann über einen freien Zündkanal im Airbag-Steuergerät die Abschalteinrichtung für die HV-Systeme angesteuert werden.

Daraufhin wird entweder das HV-System selbst abgeschaltet bzw. deaktiviert, oder es kann das HV-System von der Stromversorgung getrennt werden, beispielsweise durch elektrisches Trennen der HV-Batterie von der Stromleitung.

Je nach festgestellter Unfallschwere können die HV-Systeme auch gemäß einem mehrstufigen Auslösekonzept abgeschaltet werden. Als Auslösekriterien können beispielsweise vorgegebene Auslöseschwellen für die Airbags (bzw. allgemeiner für die Rückhaltesysteme) berücksichtigt bzw. verwendet werden.

Bei anderen Betriebszuständen des Fahrzeugs, die ebenfalls eine Abschaltung der HV-Systeme gebieten, die jedoch durch das Airbag-Steuergerät nicht ausreichend sicher festgestellt werden können, beispielsweise bei einem Fahrzeugüberschlag, bei abgeschalteter Zündung aber aktiven HV-Systemen (etwa bei einer Stand-Klimatisierung oder beim Aufladen der Akkumulatoren) kann eine zusätzliche Sensorik und gegebenenfalls ein zusätzliches Steuergerät zum Ansteuern der Abschalteinrichtung für die HV-Systeme vorgesehen sein.

Aus der DE 10 2009 039 913 A1 ist beispielsweise ein Kraftfahrzeug mit einem HV-System für den Antrieb des Kraftfahrzeugs, einer Sensorik zur Bereitstellung eines Sensorsignals und einem Steuergerät zum Abschalten des HV-Systems in Abhängigkeit von dem Sensorsignal bekannt, wobei die Sensorik und das Steuergerät ausschließlich zum Abschalten des HV-Systems im Kraftfahrzeug eingesetzt werden. Dadurch können beispielsweise unterschiedliche Auslöseschwellen zum Auslösen eines Airbags und zum Abschalten eines HV-Systems realisiert werden.

Da unter ungünstigen Umständen das Abschalten von HV-Systemen nicht funktionieren kann, ist weiter bekannt, Personen vor einer möglicherweise gegebenen Gefahr durch unter Spannung stehende Bauteile bzw. Einrichtungen des Fahrzeugs zu warnen.

So beschreibt beispielsweise die DE 10 2008 043 909 A1 ein Fahrzeug, insbesondere Hybridfahrzeug, mit einer an ein Hochvolt-Netz angeschlossenen elektrischen Einrichtung, die eine für die Berührung durch eine Person unzulässig hohe Spannung aufweist. Dieses Fahrzeug weist einen im Falle eines Unfalls ansprechenden Meldesensor auf, der an eine Warneinrichtung zur Signalisierung der Spannungshöhe angeschlossen ist. Kommt es zu einem Unfall mit dem Fahrzeug, spricht der Meldesensor an, wodurch die angeschlossene Warneinrichtung die Spannungshöhe signalisiert. Als Meldesensoren kommen sämtliche Sensoren in Betracht, die unfalltypische Konstellationen detektieren, die im normalen Fahrbetrieb des Fahrzeugs nicht vorkommen. Die US 2010044126 und DE 4323609 offenbaren Fahrzeuge mit Unfallsensoren und Einrichtungen zur Abschaltung des HV-Systems des Fahrzeuges.

Es ist Aufgabe der vorliegenden Erfindung, eine technische Lösung für das sichere Stromlos-Schalten von Einrichtungen eines Fahrzeugs bereitzustellen, mit der Nachteile des Stands der Technik vermieden werden. Diese Aufgabe wird gelöst und weitere Vorteile werden erzielt durch das Fahrzeug gemäß Anspruch 1 und das Verfahren gemäß Anspruch 11. Vorteilhafte Weiterbildungen der Erfindung sind Gegenstand der Unteransprüche.

Das erfindungsgemäße Fahrzeug, insbesondere Kraftfahrzeug, Hybrid-Fahrzeug oder Elektro-Fahrzeug, umfasst die Merkmale des Anspruchs 1.

Das erfindungsgemäße Fahrzeug ist dadurch gekennzeichnet, dass bei Ausgabe des Sensorsignals das Element der ersten Einrichtung automatisch spannungsfrei geschaltet werden kann.

Alle bisher aus dem Stand der Technik bekannten Lösungen sehen lediglich eine Abschaltung von HV-Systemen vor, also von Systemen, die mit einer Hochvolt-Spannungsversorgung, i.d.R. einem Hochvolt-Akkumulator versorgt werden.

In Fahrzeugen, insbesondere auch in herkömmlichen Kraftfahrzeugen, werden jedoch auch Bauteile und Einrichtungen eingesetzt, welche selbst mit hohen Spannungen arbeiten bzw. diese erzeugen. Beispiele hierfür sind eine 230V-Steckdose oder ein Ionisator. Die Spannungsversorgung für derartige Bauteile und Einrichtungen weist jedoch oftmals eine für Menschen ungefährliche Kleinspannung, beispielsweise 12 Volt Gleichspannung, auf.

Im Falle eines Unfalls stellen derartige Bauteile und Einrichtungen somit eine Gefahr für Menschen dar, da sie weiterhin zumindest eine Element aufweisen können, das bei Berührung durch einen Menschen eine für diesen gefährliche elektrische Spannung aufweist. Ein stromlos Schalten dieser Bauteile und Einrichtungen im Falle eines Unfalls war gemäß den aus dem Stand der Technik bekannten Lösungen nicht vorgesehen. Dieser Nachteil des Stands der Technik wird durch die vorliegende Erfindung überwunden.

Gemäß der Erfindung beträgt die gefährliche elektrische Spannung des Elements der ersten Einrichtung größer 60 Volt Gleichstrom oder größer 25 Volt Wechselspannung.

Und gemäß der Erfindung beträgt die Kleinspannung des Leiters kleiner gleich 60 Volt Gleichstrom oder kleiner gleich 25 Volt Wechselspannung. Des Weiteren kann die Kleinspannung des Leiters kleiner gleich 24 Volt Gleichspannung, insbesondere kleiner gleich 12 Volt Gleichspannung sein.

Die angegebenen Spannungswerte sind so zu interpretieren, dass sie auch Abweichungen von den angegebenen Werten umfassen, wie sie üblicherweise beim Betrieb von Fahrzeugen und den in ihnen verwendeten Einrichtungen und Spannungsquellen (Batterien, Akkumulatoren) auftreten.

Weiter kann es von Vorteil sein, wenn die Unfallsensorik einen Beschleunigungssensor, Drehratensensor und/oder einen Airbagsensor aufweist. Außerdem ist es günstig, wenn die erste Einrichtung derart ausgebildet ist, dass sie bei Ausgabe des Sensorsignals das Element automatisch spannungsfrei zu schalten vermag. Ähnliches gilt für die Weiterbildung der vorliegenden Erfindung, die vorsieht, dass das Fahrzeug weiter eine Steuergerät aufweist, das derart ausgebildet ist, dass es bei Ausgabe des Sensorsignals das Element der ersten Einrichtung automatisch spannungsfrei zu schalten vermag.

Des Weiteren kann bei dem Fahrzeug vorgesehen sein, dass auch bei abgeschalteter Zündung die Unfallsensorik und gegebenenfalls das Steuergerät aktivierbar sind, und das Element der ersten Einrichtung automatisch spannungsfrei geschaltet werden kann.

Auch ist es von Vorteil, wenn das Fahrzeug weiter ein Fahrzeug-Bussystem aufweist und das Sensorsignal über das Fahrzeug-Bussystem übertragbar und zum automatischen spannungsfrei schalten des Elements der ersten Einrichtung verwendbar ist.

Gemäß noch einer weiteren Weiterbildung der Erfindung umfasst das Fahrzeug weiter mindestens eine zweite Einrichtung, die zumindest ein Element aufweist, das bei Berührung durch einen Menschen eine für diesen gefährliche elektrische Spannung aufweisen kann, und die elektrisch mit einem Hochspannungs-Leiter mit einer elektrischen Spannung größer 60 Volt Gleichstrom oder größer 25 Volt Wechselspannung verbunden ist. Gemäß dieser Weiterbildung ist das Fahrzeug dadurch gekennzeichnet, dass bei Ausgabe des Sensorsignals das Element der zweiten Einrichtung automatisch spannungsfrei geschaltet werden kann.

Die vorliegende Erfindung umfasst auch ein Verfahren zum spannungsfrei Schalten einer ersten Einrichtung eines Fahrzeugs, insbesondere Kraftfahrzeug, Hybrid-Fahrzeug oder Elektro-Fahrzeug, wobei die erste Einrichtung zumindest ein Element aufweist, das bei Berührung durch einen Menschen eine für diesen gefährliche elektrische Spannung aufweisen kann und wobei die erste Einrichtung elektrisch mit einem Leiter verbunden ist, der eine Kleinspannung aufweist, und wobei das Fahrzeug eine Unfallsensorik aufweist, die im Falle eines Unfalls ein Sensorsignal ausgibt, wobei das Verfahren die folgenden Schritte umfasst:
- Ausgabe eines Sensorsignals durch die im Fahrzeug vorhandene Unfallsensorik im Falle eines Unfalls, und
- automatisches spannungsfrei schalten des Elements.

Die vorliegende Erfindung wird nun anhand der beigefügten Zeichnungen näher erläutert.

Dabei zeigen
- Fig. 1: eine erste Ausführungsform des erfindungsgemäßen Fahrzeugs;
- Fig. 2: eine zweite Ausführungsform des erfindungsgemäßen Fahrzeugs; und
- Fig. 3: eine dritte Ausführungsform des erfindungsgemäßen Fahrzeugs.

Die Darstellungen in den Figuren sind rein schematisch und nicht maßstabsgerecht. Innerhalb der Figuren sind gleiche oder ähnliche Elemente mit gleichen Bezugszeichen versehen.

Die nachfolgend geschilderten Ausführungsbeispiele stellen bevorzugte Ausführungsformen der vorliegenden Erfindung dar. Die vorliegende Erfindung ist selbstverständlich nicht auf diese Ausführungsformen beschränkt.

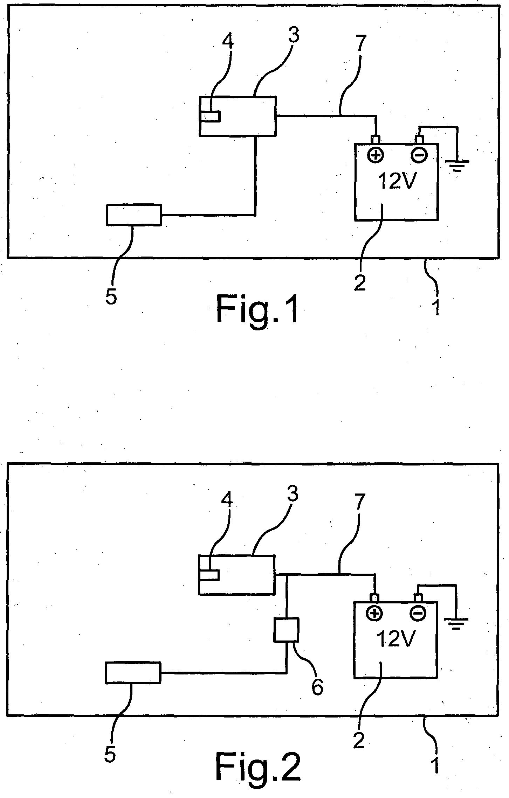

In den Figuren 1, 2 und 3 ist rein schematisch ein Fahrzeug 1 gezeigt, das als eine Spannungsquelle 2 einen Akkumulator oder eine Batterie mit einer Ausgangsspannung von etwa 12 Volt aufweist. Mit diesem Akkumulator 2 ist eine erste Einrichtung 3 über einen Leiter 7 elektrisch verbunden. Die Einrichtung 3 ist in der Lage, aus der 12 Volt Eingangsspannung eine für einen Menschen gefährlich hohe Spannung zu erzeugen.

In den gezeigten Beispielen weist diese gefährlich hohe Spannung das Element 4 der ersten Einrichtung 3 auf. Selbstverständlich kann auch in der Einrichtung 3 selbst eine gefährlich hohe Spannung vorhanden sein.

Gemäß ISO 6469 gelten Bauteile bzw. Einrichtungen in Fahrzeugen, die eine Spannung über 60 Volt Gleichstrom oder 25 Volt Wechselstrom aufweisen, als gefährlich und werden im Allgemeinen als "Hochvolt-Systeme" (HV-Systeme) bezeichnet. Entsprechend gelten Bauteile bzw. Einrichtungen, die eine Spannung kleiner gleich 60 Volt Gleichstrom oder kleiner gleich 25 Volt Wechselstrom aufweisen, als ungefährlich.

Das Fahrzeug 1 weist eine Unfallsensorik 5 auf. Für die Unfallsensorik 5 können sämtliche Sensoren verwendet werden, mit denen unfalltypische Konstellationen detektiert werden können, die im normalen Fahrbetrieb des Fahrzeugs 1 nicht vorkommen. Die Unfallsensorik 5 kann daher beispielsweise einen Beschleunigungssensor, Drehratensensor und/oder einen Airbagsensor aufweisen.

Mittels eines Beschleunigungssensors kann beispielsweise ein Frontal-, Seiten- oder Heckauprall detektiert werden, und mittels eines Drehratensensors ein Fahrzeugüberschlag. Für die Unfallsensorik 5 kann gegebenenfalls auf die Sensorik für die Auslösung von Airbags zurückgegriffen werden.

Da zwischen den Kriterien für die Auslösung eines Airbags und der Abschaltung von spannungsführenden Einrichtungen in einem Fahrzeug nicht in allen Fällen ein zwingender Zusammenhang besteht, kann es von Vorteil sein, für das erfindungsgemäße Fahrzeug 1 eine eigene Unfallsensorik 5 für die Abschaltung der elektrischen Einrichtungen vorzusehen.

Bei Ausgabe des Sensorsignals wird das Element 4 der ersten Einrichtung 3 spannungsfrei geschaltet. Hierbei kann entweder das Element 4 spannungsfrei geschaltet werden oder die erste Einrichtung 3 selbst. Weiter ist es von der vorliegenden Erfindung umfasst, dass hierzu auch der Leiter 7 von der Spannungsquelle 2 elektrisch getrennt wird.

Gemäß dem im Fig. 1 gezeigten Ausführungsbeispiel erfolgt die Abschaltung durch die Hochspannung erzeugende Einrichtung 3.

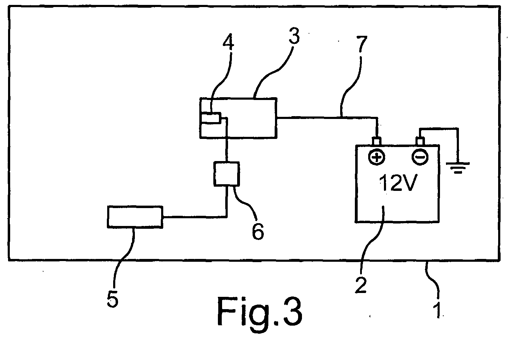

Gemäß den in den Figuren 2 und 3 gezeigten Ausführungsbeispielen weist das Fahrzeug 1 weiter ein Steuergerät 6 auf. Dieses besitzt die Fähigkeit, bei Ausgabe des Signals der Sensoreinrichtung 5 das Element 4 der ersten Einrichtung 3 spannungsfrei zu schalten. Bei dem in Fig. 2 gezeigten Ausführungsbeispiel unterbricht das Steuergerät 6 beispielsweise den elektrischen Leiter 7 zwischen dem Akkumulator 2 und der Einrichtung 3. Und gemäß dem in Fig. 3 gezeigten Ausführungsbeispiel unterbricht das Steuergerät 6 eine elektrische Verbindung von/innerhalb der ersten Einrichtung 3 zum Element 4. Ein Unterbrechen kann beispielsweise mittels einer Schaltereinrichtung erfolgen, die von dem Steuergerät 6 angesteuert wird.

Als ein Beispiel für eine erste Einrichtung 3 mit einem Element 4 sei hier eine 230V Wechselstromsteckdoseneinrichtung genannt. Eine Wechselstromsteckdoseneinrichtung, die von einer 12 Volt Gleichstromspannungsquelle 2 gespeist wird, weist einen Wechselrichter auf, der den elektrischen 12 Volt Eingangs-Gleichstrom in einen Ausgangs-Wechselstrom mit 50 Herz und 230 Volt wandelt. Im beschriebenen Beispiel wäre somit der Wechselrichter ein Teil der ersten Einrichtung 3. Neben dem Wechselrichter weist eine Wechselstromsteckdoseneinrichtung noch eine Steckdose auf. Eine solche Steckdose ist ein Beispiel für ein Element 4 der ersten Einrichtung 3.

Nun kann erfindungsgemäß beispielweise der Wechselrichter so ausgebildet sein, dass er, sobald er das Sensorsignal von der Unfallsensorik 5 empfängt, sich selbst abschaltet, und somit auch die Steckdose 4 spannungsfrei geschaltet wird. Ein solches Ausführungsbeispiel entspricht dem in Fig. 1 abgebildeten.

Ebenso ist von der vorliegenden Erfindung auch eine Ausführungsform umfasst, bei der ein Steuergerät 6 das Sensorsignal von der Unfallsensorik 5 empfängt und dann durch das Steuergerät 6 das Element 4 spannungsfrei geschaltet wird. Hierzu kann beim beschriebenen Beispiel das Steuergerät 6 beispielsweise den elektrischen Leiter 7 durch entsprechendes Ansteuern eines Schalters unterbrechen. Ein solches Ausführungsbeispiel entspricht dem in Fig. 2 abgebildeten. Oder das Steuergerät 6 kann beispielsweise eine elektrische Verbindung zwischen dem Wechselrichter und der Steckdose mittels eines Schalters unterbrechen. Ein solches Ausführungsbeispiel entspricht dem in Fig. 3 abgebildeten.

Auch ist es gemäß einer weiteren Ausgestaltungen möglich, dass beispielsweise durch das Steuergerät 6 der Wechselrichter direkt ausgeschaltet wird.

Selbstverständlich sind auch sämtlichen denkbaren Kombination der oben beschriebenen Möglichkeiten zum spannungsfrei Schalten des Elements 4 von der vorliegenden Erfindung umfasst.

Es ist von Vorteil, wenn beim erfindungsgemäßen Fahrzeug 1 vorgesehen ist, dass auch bei abgeschalteter Zündung die Unfallsensorik 5 und gegebenenfalls das Steuergerät 6 aktivierbar sind, und das Element 4 der ersten Einrichtung 3 automatisch spannungsfrei schaltbar sind. Eine Situation, bei der bei einem Fahrzeug 1 die Zündung abgeschaltet ist, bzw. bei einem Elektrofahrzeug die Stromversorgung zu den Antriebsmotoren ausgeschaltet ist, liegt beispielsweise vor, wenn das Fahrzeug 1 sich in einem Aufladezustand befindet oder eine Standklimatisierung erfolgt. Auch in derartigen Situationen können Elemente 4 in Einrichtungen 3 des Fahrzeugs 1 eine bei Berührung durch einen Menschen gefährlich hohe Spannung aufweisen, und es kann zu einem Unfallgeschehen durch einen Dritten kommen.

Das Signal der Unfallsensorik 5 kann auf jede geeignete Weise zur ersten Einrichtung 3 bzw. zum Steuergerät 6 übertragen werden, beispielsweise drahtgebunden oder drahtlos. Gemäß einer bevorzugten Ausführungsform weist das erfindungsgemäße Fahrzeug 1 ein in den Figuren nicht gezeigtes Fahrzeug-Bussystem auf und ist das Sensorsignal über das Fahrzeug-Bussystem übertragbar und zum automatischen spannungsfrei schalten des Elements 4 der ersten Einrichtung 3 verwendbar.

Ein Fahrzeug-Bussystem hat den Vorteil, dass grundsätzlich sämtliche daran angeschlossenen Einrichtungen die auf dem Fahrzeug-Bussystem transportieren Daten auslesen und verwenden können. Somit braucht bei Vorliegen eines Fahrzeug-Bussystems eine Signalisierung der Unfallsensorik 5 lediglich einmal auf das Fahrzeug-Bussystem gegeben werden und steht einer Mehrzahl von Einrichtungen 3 oder Steuergeräten 6 zur Verfügung.

Oftmals weist ein Fahrzeug nicht nur eine Spannungsversorgung mit Kleinspannung sondern auch eine Spannungsversorgung mit Hochspannung auf, jeweils mit daran angeschlossenen Einrichtungen, die bei einer Berührung durch den Menschen eine für diesen gefährliche Spannung aufweisen. Daher ist es bei einem erfindungsgemäßen Fahrzeug 1, das auch eine zweite Einrichtung aufweist, die zumindest ein Element aufweist, das bei Berührung durch einen Menschen eine für diesen gefährliche elektrische Spannung aufweisen kann, und die elektrisch mit einem Hochspannungs-Leiter mit einer elektrischen Spannung größer 60 Volt Gleichstrom oder größer 25 Volt Wechselspannung verbunden ist, von Vorteil, wenn bei Ausgabe des Sensorsignals auch das Element der zweiten Einrichtung automatisch spannungsfrei geschaltet werden kann.

Selbstverständlich sind alle möglichen Ausführungsformen, die von der vorliegenden Erfindung in Bezug auf die erste Einrichtung und das hierbei vorhandene Element beschrieben und beansprucht sind, auch in Bezug auf die zweite Einrichtung und das hierbei vorhandene Element anwendbar und von der vorliegenden Erfindung umfasst.

Zusammenfassend betrifft die vorliegende Erfindung eine technische Lösung zum Sicheren Abschalten von hochspannungserzeugenden Einrichtungen in Fahrzeugen, insbesondere in Kraftfahrzeugen, Hybrid-Fahrzeugen und Elektrofahrzeugen.

In Fahrzeugen werden mittlerweile immer mehr Bauteile und Einrichtungen eingesetzt, welche mit hohen Spannungen arbeiten. Die gängigsten dieser Komponenten sind HV-Komponenten, wie z.B. die Leistungselektronik oder ein elektrischer Klimakompressor in einem Hybrid- oder Elektrofahrzeug.

Diese Komponenten, welche mit einer HV-Batterie versorgt werden, werden bei einem Unfall (Crashfall) automatisch durch das Deaktivieren der HV-Batterie (Trennen der HV-Batterie durch entsprechende Schalteinrichtungen) abgeschaltet. Dies führt zu Komponenten, welche nach einem Unfall keine Spannung mehr führen, und somit für Rettungskräfte und Insassen keine Gefährdung bedeuten.

Bisher werden jedoch Komponenten, welche aus einer Kleinspannung (beispielsweise 12 Volt Gleichspannung) hohe Spannungen (größer 60 Volt Gleichstrom oder größer 25 Volt Wechselspannung) erzeugen, bei einem Unfall nicht abgeschaltet, obwohl die Berührung eines Menschen mit einer Komponente, die derartig hohe Spannungen aufweisen, für diesen gefährlich ist. Dieser Nachteil des Stands der Technik wird mit der vorliegenden Erfindung beseitigt.

Die meisten Steuergeräte eines Fahrzeugs sind an einem Fahrzeug-Bussystem angeschlossen. Bei Erkennung eines Unfalls (Fahrzeugcrash) durch eine Crashsensorik bzw. Crash-Steuergeräte werden spezielle Signale (Daten) auf die Fahrzeug-Bussysteme gegeben, welche von vielen Steuergeräten genutzt werden können, um eine gewollte Reaktion herbeizuführen.

Es ist daher eine bevorzugte Ausführungsform der vorliegenden Erfindung, die vorhandenen speziellen Signale (Daten) auch Komponenten zur Verfügung zu stellen bzw. in Komponenten auszuwerten, welche Hochspannungen aus einer Kleinspannungs-Versorgung (beispielsweise 12 Volt Gleichspannung) erzeugen. Nach bzw. bei einem Unfall (Fahrzeugcrash) können diese Komponenten dann deaktiviert bzw. spannungsfrei geschaltet werden. Dies kann beispielsweise direkt in der hochspannungserzeugenden Einrichtung (Komponente, Steuergerät) erfolgen oder in einem anderen Steuergerät, welches dazu in der Lage ist, die relevante hochspannungserzeugende Einrichtung abzuschalten.

Durch die vorliegende Erfindung wird die Sicherheit von Insassen und von Rettungskräften nach einem Unfall eines Fahrzeugs erhöht.

## Patentansprüche

1. Fahrzeug (1), insbesondere Kraftfahrzeug, Hybrid-Fahrzeug oder Elektro-Fahrzeug, mit
- einer ersten Einrichtung (3), die zumindest ein Element (4) aufweist, das bei Berührung durch einen Menschen eine für diesen gefährliche elektrische Spannung von größer 60 Volt Gleichstrom oder größer 25 Volt Wechselspannung aufweisen kann, wobei
- die erste Einrichtung (3) elektrisch mit einem Leiter (7) verbunden ist, der eine Kleinspannung von kleiner gleich 60 Volt Gleichstrom oder kleiner gleich 25 Volt Wechselspannung aufweist,
- die erste Einrichtung (3) dazu eingerichtet ist, aus der an dem Leiter (7) anliegenden Kleinspannung die bei einer Berührung für den Menschen gefährliche elektrische Spannung zu erzeugen, und
- einer Unfallsensorik (5), die im Falle eines Unfalls ein Sensorsignal ausgibt,
**dadurch gekennzeichnet, dass**
- bei Ausgabe des Sensorsignals das Element (4) der ersten Einrichtung (3) automatisch spannungsfrei geschaltet werden kann.

2. Fahrzeug (1) nach Anspruch 1,
**dadurch gekennzeichnet, dass**
die Kleinspannung des Leiters (7) kleiner gleich 24 Volt Gleichspannung, insbesondere kleiner gleich 12 Volt Gleichspannung beträgt.

3. Fahrzeug (1) nach Anspruch 1 oder 2,
**dadurch gekennzeichnet, dass**
die Unfallsensorik (5) einen Beschleunigungssensor, Drehratensensor und/oder einen Airbagsensor aufweist.

4. Fahrzeug (1) nach einem der vorhergehenden Ansprüche,
**dadurch gekennzeichnet, dass**
die erste Einrichtung (3) derart ausgebildet ist, dass sie bei Ausgabe des Sensorsignals das Element (4) automatisch spannungsfrei zu schalten vermag.

5. Fahrzeug (1) nach einem der vorhergehenden Ansprüche,
**dadurch gekennzeichnet, dass**
es weiter eine Steuergerät (6) aufweist, das derart ausgebildet ist, dass es bei Ausgabe des Sensorsignals das Element (4) der ersten Einrichtung (3) automatisch spannungsfrei zu schalten vermag.

6. Fahrzeug (1) nach einem der vorhergehenden Ansprüche,
**dadurch gekennzeichnet, dass**
auch bei abgeschalteter Zündung die Unfallsensorik (5) und gegebenenfalls das Steuergerät (6) aktivierbar sind, und das Element (4) der ersten Einrichtung (3) automatisch spannungsfrei geschaltet werden kann.

7. Fahrzeug (1) nach einem der vorhergehenden Ansprüche,
**dadurch gekennzeichnet, dass**
es weiter ein Fahrzeug-Bussystem aufweist und das Sensorsignal über das Fahrzeug-Bussystem übertragbar und zum automatischen spannungsfrei schalten des Elements (4) der ersten Einrichtung (3) verwendbar ist.

8. Fahrzeug (1) nach einem der vorhergehenden Ansprüche,
weiter umfassend mindestens eine zweite Einrichtung, die zumindest ein Element aufweist, das bei Berührung durch einen Menschen eine für diesen gefährliche elektrische Spannung aufweisen kann, und die elektrisch mit einem Hochspannungs-Leiter mit einer elektrischen Spannung größer 60 Volt Gleichstrom oder größer 25 Volt Wechselspannung verbunden ist,
**dadurch gekennzeichnet, dass**
bei Ausgabe des Sensorsignals das Element der zweiten Einrichtung automatisch spannungsfrei geschaltet werden kann.

9. Verfahren zum spannungsfrei Schalten einer ersten Einrichtung (3) eines Fahrzeugs (1), insbesondere Kraftfahrzeug, Hybrid-Fahrzeug oder Elektro-Fahrzeug, wobei die erste Einrichtung (3) zumindest ein Element (4) aufweist, das bei Berührung durch einen Menschen eine für diesen gefährliche elektrische Spannung von größer 60 Volt Gleichstrom oder größer 25 Volt Wechselspannung aufweisen kann, die erste Einrichtung (3) elektrisch mit einem Leiter (7) verbunden ist, der eine Kleinspannung von kleiner gleich 60 Volt Gleichstrom oder kleiner gleich 25 Volt Wechselspannung aufweist, die erste Einrichtung (3) dazu eingerichtet ist, aus der an dem Leiter (7) anliegenden Kleinspannung die bei einer Berührung für den Menschen gefährliche elektrische Spannung zu erzeugen, und das Fahrzeug (1) eine Unfallsensorik (5) aufweist, die im Falle eines Unfalls ein Sensorsignal ausgibt, mit den Schritten:
- Ausgabe eines Sensorsignals durch die im Fahrzeug (1) vorhandene Unfallsensorik (5) im Falle eines Unfalls, und
- automatisches spannungsfrei Schalten des Elements (4).

## Claims

1. Vehicle (1), in particular a motor vehicle, hybrid vehicle or electric vehicle, comprising
- a first device (3) having at least one element (4) which, when touched by a person, can have an electrical voltage of greater than 60 volts DC or greater than 25 volts AC, which is dangerous to said person, wherein
- the first device (3) is electrically connected to a conductor (7) which has a low voltage of less than or equal to 60 volts DC or less than or equal to 25 volts AC,
- the first device (3) is configured so as to create from the low voltage applied on the conductor (7) an electrical voltage dangerous to persons on touching, and
- an accident sensor system (5) which emits a sensor signal in the event of an accident, **characterised in that**
- on output of the sensor signal, the element (4) of the first device (3) can be automatically disconnected from the voltage supply.

2. Vehicle (1) according to claim 1, **characterised in that** the low voltage of the conductor (7) has a value of less than or equal to 24 volts DC, in particular less than or equal to 12 volts DC.

3. Vehicle (1) according to claim 1 or 2, **characterised in that** the accident sensor system (5) comprises an acceleration sensor, rotation rate sensor and/or an airbag sensor.

4. Vehicle (1) according to any of the preceding claims, **characterised in that** the first device (3) is configured in such a way that, on output of the sensor signal, the element (4) is automatically disconnected from the voltage supply.

5. Vehicle (1) according to any of the preceding claims, **characterised in that** it further comprises a control device (6) configured in such a way that, on output of the sensor signal, the element (4) of the first device (3) is automatically disconnected from the voltage supply.

6. Vehicle (1) according to any of the preceding claims, **characterised in that** when the ignition is switched off the accident sensor system (5) and, where appropriate, the control unit (6) can be activated, and the element (4) of the first device (3) can be automatically disconnected from the voltage supply.

7. Vehicle (1) according to any of the preceding claims, **characterised in that** it further comprises a vehicle bus-system and the sensor signal can be transmitted via the vehicle bus-system and can be used to automatically disconnect the element (4) of the first device (3) from the voltage supply.

8. Vehicle (1) according to any of the preceding claims, further comprising at least one second device having at least one element which, when touched by a person, can have an electrical voltage which is dangerous to said person, and which is electrically connected with a high-voltage conductor having an electrical voltage greater than 60 volts DC or greater than 25 volts AC, **characterised in that**, on output of the sensor signal, the element of the second device can be automatically disconnected from the voltage supply.

9. Method for disconnection from the voltage supply of a first device (3) of a vehicle (1), in particular a motor vehicle, hybrid vehicle or electric vehicle, wherein the first device (3) has at least one element (4) which when touched by a person can have an electrical voltage which is dangerous to said person of greater than 60 volts DC or greater than 25 volts AC, the first device (3) is electrically connected with a conductor (7) having a low voltage of less than or equal to 60 volts DC or less than or equal to 25 volts AC, the first device (3) being configured so as to create from the low voltage applied on the conductor (7) an electrical voltage dangerous to persons on touching, and the vehicle (1) having an accident sensor system (5) which in the event of an accident emits a sensor signal, comprising the steps:
- output of a sensor signal in the event of an accident by the accident sensor system (5) located in the vehicle (1), and
- automatic disconnection of the voltage supply of the element (4).

## Revendications

1. Véhicule (1), notamment véhicule automobile, véhicule hybride ou véhicule électrique, avec
- un premier dispositif (3) qui comporte au moins un élément (4) qui peut présenter, lorsqu'une personne le touche, une tension électrique dangereuse pour ladite personne, tension de plus de 60 V en courant continu ou de plus de 25 V en tension alternative,
- le premier dispositif (3) étant relié électriquement à un conducteur (7) qui présente une petite tension inférieure ou égale à 60 V en courant continu ou inférieure ou égale à 25 V en tension alternative,
- le premier dispositif (3) étant conçu pour produire à partir de la petite tension appliquée au conducteur (7) la tension électrique dangereuse pour l'homme lors d'un contact, et
- un dispositif détecteur d'accident (5) qui délivre un signal de capteur dans le cas d'un accident,
**caractérisé en ce que**
- lors de la délivrance du signal de capteur, l'élément (4) du premier dispositif (3) peut être mis automatiquement hors tension.

2. Véhicule (1) selon la revendication 1, **caractérisé en ce que** la petite tension du conducteur (7) est inférieure ou égale à 24 V en tension continue, notamment inférieure ou égale à 12 V en tension continue.

3. Véhicule (1) selon la revendication 1 ou 2, **caractérisé en ce que** le dispositif détecteur d'accident (5) comporte un capteur d'accélération, un capteur de vitesse de rotation et/ou un capteur d'airbag.

4. Véhicule (1) selon l'une des revendications précédentes, **caractérisé en ce que** le premier dispositif (3) est conçu de telle sorte qu'il est capable de mettre automatiquement hors tension l'élément (4) lors de la délivrance du signal de capteur.

5. Véhicule (1) selon l'une des revendications précédentes, **caractérisé en ce qu'**il comporte aussi un appareil de commande (6) qui est conçu de telle sorte qu'il est capable de mettre automatiquement hors tension l'élément (4) du premier dispositif (3) lors de la délivrance du signal de capteur.

6. Véhicule (1) selon l'une des revendications précédentes, **caractérisé en ce que**, lorsque l'allumage est coupé, le dispositif capteur d'accident (5) et le cas échéant l'appareil de commande (6) sont activables et l'élément (4) du premier dispositif (3) peut être mis automatiquement hors tension.

7. Véhicule (1) selon l'une des revendications précédentes, **caractérisé en ce qu'**il comporte aussi un système de bus de véhicule et le signal de capteur peut être transmis par l'intermédiaire du système de bus de véhicule et peut être utilisable pour mettre automatiquement hors tension l'élément (4) du premier dispositif (3).

8. Véhicule (1) selon l'une des revendications précédentes, comprenant aussi au moins un deuxième dispositif qui comporte au moins un élément qui peut présenter, lorsqu'une personne le touche, une tension électrique dangereuse pour ladite personne, et qui est relié électriquement à un conducteur de haute tension avec une tension électrique de plus de 60 V en courant continu ou de plus de 25 V en tension alternative, **caractérisé en ce que**, lors de la délivrance du signal de capteur, l'élément du deuxième dispositif peut être mis automatiquement hors tension.

9. Procédé pour mettre hors tension un premier dispositif (3) d'un véhicule (1), notamment d'un véhicule automobile, d'un véhicule hybride ou d'un véhicule électrique, le premier dispositif (3) comportant au moins un élément (4) qui peut présenter, lorsqu'une personne le touche, une tension électrique dangereuse pour ladite personne, tension de plus de 60 V en courant continu ou de plus de 25 V en tension alternative, le premier dispositif (3) étant relié électriquement à un conducteur (7) qui présente une petite tension inférieure ou égale à 60 V en courant continu ou inférieure ou égale à 25 V en tension alternative, le premier dispositif (3) étant conçu pour produire à partir de la petite tension appliquée au conducteur (7) la tension électrique dangereuse pour l'homme lors d'un contact, et le véhicule (1) comportant un dispositif détecteur d'accident (5) qui délivre un signal de capteur dans le cas d'un accident,
avec les étapes :
- délivrance d'un signal de capteur par le dispositif détecteur d'accident (5) présent dans le véhicule (1), dans le cas d'un accident, et
- mise hors tension automatique de l'élément (4).
